**Europäisches Patentamt**

**European Patent Office**

**Office européen des brevets**

(19)

(11) Veröffentlichungsnummer: **0 131 268**

**B1**

(12) # EUROPÄISCHE PATENTSCHRIFT

(45) Veröffentlichungstag der Patentschrift:
25.01.89

(21) Anmeldenummer: 84107870.2

(22) Anmeldetag: 05.07.84

(51) Int. Cl.⁴: **C 08 F 297/08**

(54) **Verfahren zum Herstellen von Propylen-Ethylen-Polymerisaten vom Typ der sogenannten "Block-Copolymerisate".**

(30) Priorität: 09.07.83 DE 3324793

(43) Veröffentlichungstag der Anmeldung:
16.01.85 Patentblatt 85/3

(45) Bekanntmachung des Hinweises auf die Patenterteilung:
25.01.89 Patentblatt 89/4

(84) Benannte Vertragsstaaten:
AT BE DE FR GB IT NL

(56) Entgegenhaltungen:
EP-A-0 079 000
DE-A-1 495 105
DE-A-2 920 729
GB-A-1 032 945

CHEMICAL ABSTRACTS, Band 99, Nr. 2, July 1983,
p. 11, Zusammenfassung Nr. 6217s, COLUMBUS
OHIO (US)

Die Akte enthält technische Angaben, die nach
dem Eingang der Anmeldung eingereicht wurden
und die nicht in dieser Patentschrift enthalten sind.

(73) Patentinhaber: BASF Aktiengesellschaft, Carl-Bosch- Strasse 38, D-6700 Ludwigshafen (DE)

(72) Erfinder: Schweier, Guenther, Dr., Friedrich-Pietzsch- Strasse 14, D-6701 Friedelsheim (DE)
Erfinder: Gruber, Wolfgang, Dr., Lorscher Ring 2B, D-6710 Frankenthal (DE)
Erfinder: Ruempler, Klaus- Dieter, Dr., Erlenweg 4, D-6706 Wachenheim (DE)

## Beschreibung

Die vorliegende Erfindung betrifft ein Verfahren zum kontinuierlichen Herstellen von Propylen-Ethylen-Polymerisaten vom Typ der sogenannten "Block-Copolymerisate", wobei man jeweils in Anwesenheit von Wasserstoff als Molekulargewichtsregler in einem bewegten Festbett aus kleinteiligem Polymerisat bei Abwesenheit eines flüssigen Reaktionsmediums aus der Gasphase heraus zunächst

(I) in einer ersten Polymerisationszone Propylen durch Zufuhr eines Ziegler-Natta-Katalysatorsystems aus

(1) einer Titan-III-Komponente,

(2) einer Dialkylaluminiumchlorid-Komponente sowie

(3) - gegebenenfalls - einer weiteren Ktalysator-Komponente homopolyrmerisiert und dann

(II) in einer zweiten Polymerisationszone ein Gemisch aus Propylen und Ethylen durch Zufuhr des in der ersten Polymerisationszone erhaltenen Reaktionsguts - sowie gegebenenfalls und vorteilhafterweise zusätzlicher Katalysatorkomponente (1) und/oder (2) und/oder (3) - dem darin vorliegenden Propylen-Homopolyrisat hinzupolymerisiert,

mit der Maßgabe, daß das Atomverhältnis Titan aus der Titan-III-Komponente (1) : Aluminium aus der Dialkylaluminiumchlorid-Komponente (2) insgesamt im Bereich von 1 : 2 bis 1 : 15 liegt.

Verfahren dieser Gattung - d.h. insbesondere Verfahren, für die es essentiell ist, in einem bewegten Bett aus kleinteiligem Polymerisat bei Abwesenheit eines flüssigen Reaktionsmediums zu arbeiten - sind bekannt und haben sich in der industriellen Praxis eingeführt. Ihre Entwicklung spiegelt sich wider in den Verfahren, wie sie zunächst aus der GB-PS-837 301, dann der GB-PS-1 006 469 und schließlich der GB-PS-1 032 945 bekannt geworden sind, - wobei es sich als günstig herausgestellt hat, jede der Stufen (I) und (II) des Verfahrens aus der letztgenannten Patentschrift so auszugestalten wie die Einzelstufe des aus der GB-PS-1 354 020 bekanntgewordenen Verfahrens.

Die bekannten Verfahren der in Rede stehenden Gattung haben sich, übers Ganze gesehen, in der Technik bewährt; - was indessen nicht ausschließt, daß sie noch den einen oder anderen Wunsch offenlassen. So ist z. B. bislang das erstrebenswerte Ziel nicht zu erreichen gewesen, Polymerisate zu gewinnen, die einerseits eine hohe Schlagzähigkeit, insbesondere eine hohe Schlagzähigkeit in der Kälte, und andererseits zugleich eine geringe Neigung zu Weißbruch haben: Arbeitet man so, daß die Schlagzähigkeit hoch wird, so fallen Polymerisate an, deren Neigung zu Weißbruch unbefriedigend groß ist.

Aus dieser unerwünschten Gegenläufigkeit des Eigenschafts-Paares Kälteschlagzähigkeit/Weißbruchneigung führt auch die Lehre der DE-A-2 920 729 nicht heraus: Überträgt man die dort offenbarten Verfahrensparameter auf das eingangs definierte, der vorliegenden Erfindung zugrundeliegende kontinuierliche Polymerisatonsverfahren, so erhält man Verfahrensprodukte, d. h. Propylen-Ethylen-Polymerisate vom Typ der sogennaten "Block-Copolymerisate", die bei einer relativ geringen Neigung zu Weißbruch eine unbefriedigend geringe Kälteschlagzähigkeit haben.

Hier setzt die Aufgaße an, die zur vorliegenden Erfindung geführt hat: Das eingangs definiere Verfahren so ausgestalten, d. h. so zu verbessern, daß es mit dem vorerwähnten Nachteil nicht mehr oder nur noch in erheblich vermindertem Maße belastet ist.

Es wurde gefunden, daß die gestellte Aufgabe gelöst werden kann, wenn man

(i) in der ersten sowie in der zweiten Polymerisationszone jeweils bei bestimmten Gesamtdrücken, bestimmten Temperaturen sowie spezifischen Relationen der Partialdrücke der Reaktanten arbeitet,

(ii) die Relationen der Partialdrücke in den verschiedenen Polymerisationszonen ihrerseits in eine spezifische Relation zueinander setzt, und

(iii) das Verhältnis Gewicht des in der ersten Polymerisationszone in Polymerisat umgesetztes Propylen : Gewicht des in der zweiten Polymerisationszone in Polymerisat umgesetztes Gemisch aus Propylen und Ethylen in speziellen Bereichen hält.

Gegenstand der Erfindung ist dementsprechend ein Verfahren zum kontinuierlichen Herstellen von Propylen-Ethylen-Polymerisaten von Typ der sogenannten "Block-Copolymerisate", wobei man jeweils in Anwesenheit von Wasserstoff als Molekulargewichtsregler in einem bewegten Festbett aus kleinteiligem Polymerisat (worunter man in der Fachsprache bekanntlich versteht ein Schüttgutbett aus kleinteiligem Polymerisat, welches durch Rühren in Bewegung gehalten wird) bei Abwesenheit eines flüssigen Reaktionsmediums aus der Gasphase heraus zunächst

(I) in einer ersten Polymerisationszone Propylen durch Zufuhr eines Ziegler-Natta-Kalysatorsystems aus

(1) einer Titan-III-Komponente,

(2) einer Dialkylaluminiumchlorid-Komponente sowei

(3) - gegebenenfalls - einer, weiteren Katalysator-Komponente homopolymerisiert und dann

(II) in einer zweiten Polymerisationszone ein Gemisch aus Propylen und Ethylen durch Zufuhr des in der ersten Polymerisationszone erhaltenen Reaktionsguts - sowie gegebenenfalls und vorteilhafterweise zusätzlicher Katalysatorkomponente (1) und/oder (2) und/oder (3) - dem darin vorliegenden Propylen-Homopolymerisat hinzupolymerisiert,

mit der Maßgabe, daß das Atomverhältnis Titan aus der Titan-III-Komponente (1) : Aluminium aus der Dialkylaluminiumchlorid-Komponente (2) insgesamt im Bereich von 1 : 2 bis 1 : 15 liegt.

Das erfindungsgemäße Verfahren ist dadurch gekennzeichnet, daß

(a) in der ersten Polymerisationszone bei einem Gesamtdruck von 25 bis 40, vorzugsweise 28 bis 33 bar sowie einer Temperatur von 70 bis 100, vorzugsweise 75 bis 90° C gearbeitet wird, mit der Maßgabe, daß das Verhältnis Propylen-Partialdruck : Wasserstoff-Partialdruck (P/H-I) 100 : 0,1 bis 100 : 15, vorzugsweise 100 : 0,5 bis 10 beträgt,

(b) in der zweiten Polymerisationszone bei einem Gesamtdruck von 22 bis 34, vorzugsweise 23 bis 28 bar sowie einer Temperatur von 63 bis 83, vorzugsweise 65 bis 75° C gearbeitet wird, mit den Maßgaben, daß (i) das Verhältnis Propylen-Partialdruck : Ethylen-Partialdruck 100 : 10 bis 100: 70, vorzugsweise 100 : 20 bis 100 : 60 und (ii) das Verhältnis Propylen-Partialdruck Wasserstoff-Partialdruck (P/H-II) 100 : 5 bis 100 : 50 beträgt,

(c) der Gesamtdruck in der ersten Polymerisationszone um wenigstens 5 bar höher gehalten wird als der Gesamtdruck in der zweiten Polymerisationszone,

(d) das Verhältnis Propylen-Partialdruck : Wasserstoff-Partialdruck in der ersten Polymerisationszone (P/H-I) zu dem Verhältnis Propylen-Partialdruck : Wasserstoff-Partialdruck in der zweiten Polymerisationszone (P/H-II) so eingestellt wird, daß die Relation P/H-I : P/H-II einen Wert von 0,6 bis 1400, vorzugsweise von 1 bis 300 und insbesondere 10 bis 100 hat, und

(e) das Verhältnis Gewicht des in der ersten Polymerisationszone in Polymerisat umgesetztes Propylen : Gewicht des in der 2. Polymerisationszone in Polymerisat umgesetztes Gemisch aus Propylen und Ethylen einen Wert zwischen 100 : 40 bis 100 : 150, insbesondere zwischen 100 : 50 bis 100 : 130 hat.

Zu dem erfindungsgemäßen Verfahren ist im einzelnen das folgende zu bemerken:

Das Polymerisationsverfahren als solches kann - unter Beachtung der kennzeichnenden Besonderheiten - in den einschlägig üblichen technologischen Ausgestaltungen durchgeführt werden. Ausgestaltung - mit anderen Worten: die technologischen Varianten der kontinuierlichen Gasphasen-Block-Copolymerisation von Propylen/Ethylen in zwei Polymerisationszonen nach Ziegler-Natta - sind, wie eingangs dargelegt, aus der Literatur und Praxis wohlbekannt, so daß sich nähere Ausführungen zu ihnen erübrigen.

Der Vollständigkeit halber ist allenfalls zu erwähnen, daß beim erfindungsgemäßen Verfahren die Komponenten des Katalysatorsystems in mannigfacher Weise in die erste - sowie gegebenenfalls auch in die zweite Polymerisationszone eingebracht werden können, z. B.

(i) die Titan-III-Komponente (1), die Dialkylaluminiumchlorid-Komponente (2) sowie - gegebenenfalls die weitere Katalysatorkomponente (3) alle örtlich gemeinsam,

(ii) die gleichen Komponenten alle örtlich getrennt voneinander,

(iii) die Komponente (1) einerseits und ein Gemisch aus den Komponenten (2) und (3) andererseits örtlich getrennt voneinander - was von besonderem Vorteil sein kann-, oder (iiii) ein Gemisch aus den Komponenten (1) und (3) einerseits und die Komponente (2) andererseits örtlich getrennt voneinander.

Es versteht sich ferner von selbst, daß bei dem neuen Verfahren mit sinkenden Werten des Verhältnisses Propylen-Partialdruck : Wasserstoff-Partialdruck (P/H-I) in der ersten Polymerisationsstufe im Endergebnis Polymerisate mit steigenden Werten des Schmelzindex' erhalten werden; - et vice versa. Wie sich ferner gezeigt hat, bedingen - in der ersten und/oder zweiten Polymerisationszone - steigende Werte des Propylen : Wasserstoff Partialdruck-Verhältnisses eine Verringerung der Kleinstkornanteile im Polymerisat.

Was die stoffliche Seite der beim erfindungsgemäßen Verfahren einzusetzenden Katalysatorsysteme betrifft, ist im einzelnen das folgende zu sagen:

Zur Titan-III-Komponente (1):

Hier kommen die einschlägig üblichen in Betracht, vor allem solche, die zu möglichst gleichförmig runden, gut rieselfähigen Polymerisatteilchen führen; - wobei sich u.a. die folgenden, zur Verwendung im erfindungsgemäßen Verfahren besonders geeigneten, zwei Gruppen hervorheben:

(1a) Titantrichloride als solche und Titantrichlorid-Cokristallisate mit Metallhalogeniden, insbesondere Aluminiumchlorid etwa der Formel $TiCl_3 \cdot \frac{1}{3} AlCl_3$.

Siehe hierzu z. B. die US-PS-3 128 252 und 3 814 743.

Wie sich gezeigt hat, ist aus dieser Gruppe für den erfindungsgemäßen Zweck besonders gut geeignet ein sehr feinteiliges Cokristallisat der Formel $TiCl_3 \cdot \frac{1}{3} AlCl_3$.

(1b) Mit Elektronendonatoren bzw. Lewis-Basen modifizierte Titantrichloride bzw. Titantrichlorid-Cokristallisate der unter (1a) bezeichneten Art. Derartige modifizierte Titantrichlorid-Katalysatorkomponenten gibt es in zahlreichen Varianten, da sie bekanntlich eine Reihe von Vorteilen mit sich bringen. Um unnötige Wiederholungen zu vermeiden sei im gegebenen Zusammenhang schlaglichtartig beispielsweise verwiesen auf die GB-PS-851 113.

Für den erfindungsgemäßen Zweck ist diese Gruppe am besten geeignet, namentlich sehr feinteilige Cokristallisate der Formel $TiCl_3 \cdot \frac{1}{3} AlCl_3$, welche mit den folgenden Donatoren bzw. Basen modifiziert sind: Ethern, wie dem Di-n-butylether und dem Diisopentylether, Estern, wie den Benzoesäure-$C_1$- bis $C_5$-Alkylestern und dem Phenylessigsäureethylester; Phosphinen, wie dem Tributylphosphin; Phosphinoxiden, wie dem Triphenylphosphinoxid; sowie Säureamiden.

Die Art und Weise der Modifizierung im einzelnen können die einschlägig üblichen sein, wobei z. B. hervorzuheben sind die für den erfindungsgemäßen Zweck besonders geeigneten Modifizierungen gemäß den GB-PS-1 447 706, 1 485 181 und 1 512 730 sowie den US-PS-4 120 823, 4 154 699, 4 154 700 und 4 229 318.

Zur Dialkylaluminiumchlorid-Komponente (2):

Als Dialkylaluminiumchlorid-Komponente kommen ebenfalls die einschlägig üblichen in Betracht; sie sind aus Literatur und Praxis so wohlbekannt, daß auf sie nicht näher eingegangen zu werden braucht. Als herausragender Vertreter sei beispielsweise genannt das Diethylaluminiumchlorid.

Zu den - gegebenenfalls mitzuverwendenden - weiteren Katalysator-Komponenten (3):

Auch hier kommen wiederum die einschlägig üblichen - in den üblichen Mengen - in Betracht; sie sind ebenfalls aus Literatur und Praxis so wohlbekannt, daß auf sie nicht näher eingegangen zu werden braucht.

Hervorzuheben ist jedoch, daß für den erfindungsgemäßen Zweck als weitere Katalysator-Komponenten (3) mit ganz besonderem Erfolg gewisse phenolische Stoffe eingesetzt werden können. Es handelt sich dabei - sowohl qualitativ als auch quantitativ - um die gleichen phenolischen Stoffe wie sie im Rahmen der US-PS-4 260 710 beschrieben sind. Anstelle unnötiger Wiederholungen wird daher diese Patentschrift insoweit zu einem Bestandteil der Offenbarung der vorliegenden Erfindung gemacht.

Insgesamt läßt sich sagen, daß die stoffliche Seite des erfindungsgemäßen Verfahrens als solche im Rahmen des einschlägig üblichen liegt.

**Beispiel 1**

In einer einschlägig üblichen Vorrichtung (einer sog. "Kaskade"; vgl. dazu die GB-PS-1 032 945) wurde kontinuierlich ein Propylen-Ethylen-Polymerisat vom Typ der sogenannten "Block-Copolymerisate", hergestellt, indem man jeweils in einem bewegten Festbett (einem gerührten konzentrischen Festbett) aus kleinteiligem Polymerisat und in Abwesenheit eines flüssigen Reaktionsmediums aus der Gasphase heraus zunächst

(I) in einer ersten Polymerisationszone mit einem Nutzvolumen von 200 l Propylen durch kontinuierliche, getrennt dosierte Zufuhr eines Ziegler-Natta-Katalysatorsystems aus

(1) einer gemäß Beispiel 2 der GB-PS-1 485 181 hergestellten Titan-III-Komponente (Menge: 23,5 mmol/h, gerechnet als Titan) sowie

(2) Diethylaluminiumchlorid homopolymerisierte und dann

(II) in einer zweiten Polymerisationszone mit einem Nutzvolumen von 200 l ein Gemisch aus Propylen und Ethylen durch Zufuhr des in der ersten Polymerisationszone erhaltenen Reaktionsguts - sowie von 7,84 mmol/h (gerechnet als Titan) zusätzlicher Katalysatorkomponente (1) nebst zusätzlicher Katalysatorkomponente (2) - dem darin vorliegenden Propylen-Homopolymerisat hinzupolymerisierte,

mit der Maßgabe, daß jeweils das Atomverhältnis Titan aus der Titan-III-Komponente (1) : Aluminium aus der Dialkylaluminiumchlorid-Komponente (2) : 1 : 10,2 betrug.

Das Verfahren wurde erfindungsgemäß im einzelnen so durchgeführt, daß

(a) in der ersten Polymerisationszone bei einem Gesamtdruck von 32 bar sowie einer Temperatur von 85°C gearbeitet wurde, mit der Maßgabe, daß das Verhältnis Propylen-Partialdruck : Wasserstoff-Partialdruck (P/H-I) 100 : 1 betrug,

(b) in der zweiten Polymerisationszone bei einem Gesamtdruck von 25 bar sowie einer Temperatur von 70°C gearbeitet wurde, mit den Maßgaben, daß (i) das Verhältnis Propylen-Partialdruck : Ethylen-Partialdruck 100 : 55 und (ii) das Verhältnis Propylen-Partialdruck : Wasserstoff-Partialdruck (P/H-II) 100 : 41 betrug,

(c) der Gesamtdruck in der ersten Polymerisationszone also um 7 bar höher gehalten wurde als der Gesamtdruck in der zweiten Polymerisationszone,

(d) das Verhältnis Propylen-Partialdruck : Wasserstoff-Partialdruck in der ersten Polymerisationszone (P/H-I) zu dem Verhältnis Propylen-Partialdruck : Wasserstoff-Partialdruck in der zweiten Polymerisationszone (P/H-II) so eingestellt wurde, daß die Relation P/H-I : P/H-II einen Wert von 41 hatte, und

(e) das Verhältnis Gewicht des in der ersten Polymerisationszone in Polymerisat umgesetztes Propylen : Gewicht des in der zweiten Polymerisationszone in Polymerisat umgesetztes Gemisch aus Propylen und Ethylen den Wert 100 : 75 hatte.

Auf diese Weise wurden 26 kg/h Polymerisat mit einem Schmelzindex (gemessen bei 230°C nach DIN 53 735) von 1,5 g/10 min erhalten; es wies eine gute Schlagzähigkeit sowie eine geringe Neigung zu Weißbruch auf.

**Beispiel 2**

In der gleichen Vorrichtung wie in Beispiel 1 wurde wiederum kontinuierlich ein Propylen-Ethylen-Polymerisat vom Typ der sogenannten "Block-Copolymerisate" hergestellt, indem man jeweils in einem bewegten Festbett (einem gerührten konzentrischen Festbett) aus kleinteiligem Polymerisat und in Abwesenheit eines flüssigen Reaktionsmediums aus der Gasphase heraus zunächst

(I) in der ersten Polymerisationszone Propylen durch kontinuierliche, getrennt dosierte Zufuhr eines Ziegler-Natta-Kstalysatorsystems aus

(i) einer gemäß Beispiel 2 der GB-PS-1 485 181 herestellten Titan-III-Komponente (Menge: 23,5 mmol/h, gerechnet als Titan),

(2) Diethylaluminiumchlorid sowie

(3) n-Octadecyl-β-(4'-oxy-3',5'-di-tert.-butylphenyl)-propionat

homopolymerisierte und dann

(II) in der zweiten Polymerisationszone ein Gemisch aus Propylen und Ethylen durch Zufuhr des in der ersten Polymerisationszone erhaltenen Reaktionsguts dem darin vorliegenden Propylen-Homopolymerisat hinzupolyrisierte,

mit der Maßgabe, daß das Atomverhältnis Titan aus der Titan-III-Komponente (1) : Aluminium aus der Dialkylaluminiumchlorid-Komponente (2) 1 : 8 und das Molverhältnis Titan aus der Titan-III-Komponente (1) : weiterer Katalysatorkomponente (3) - d. h. dem n-Octadecyl-β-(4'-oxy-3',5'-di-tert.-butylphenyl)-propionat - 1 : 0,3 betrug.

Das Verfahren wurde erfindungsgemäß im einzelnen so durchgeführt, daß

(a) in der ersten Polymerisationszone bei einem Gesamtdruck von 31 bar sowie einer Temperatur von 87° C gearbeitet wurde, mit der Maßgabe, daß das Verhältnis Propylen-Partialdruck : Wasserstoff-Partialdruck (P/H-I) 100 : 1 betrug,

(b) in der zweiten Polymerisationszone bei einem Gesamtdruck von 25 bar sowie einer Temperatur von 68° C gearbeitet wurde, mit den Maßgaben, daß (i) das Verhältnis Propylen-Partialdruck : Ethylen-Partialdruck 100 : 54 und (ii) das Verhältnis Propylen-Partialdruck : Wasserstoff-Partialdruck (P/H-II) 100 : 44 betrug,

(c) der Gesamtdruck in der ersten Polymerisationszone also um 6 bar höher gehalten wurde als der Gesamtdruck in der zweiten Polymerisationszone,

(d) das Verhältnis Propylen-Partialdruck: Wasserstoff-Partialdruck in der ersten Polymerisationszone (P/H-I) zu dem Verhältnis Propylen-Partialdruck : Wasserstoff-Partialdruck in der zweiten Polymerisationszone (P/H-II) so eingestellt wurde, daß die Relation P/H-I : P/H-II einen Wert von 44 hatte, und

(e) das Verhältnis Gewicht des in der ersten Polymerisationszone in Polymerisat umgesetztes Propylen : Gewicht des in der zweiten Polymerisationszone in Polymerisat umgesetztes Gemisch aus Propylen und Ethylen den Wert 100 : 52 hatte.

Auf diese Weise wurden 22,4 kg/h Polymerisat mit einem Schmelzindex (gemessen bei 230° C nach DIN 53 735) von 1,7 g/10 min erhalten; es wies ebenfalls eine gute Schlagzähigkeit sowie eine relativ geringe Neigung zu Weißbruch auf.

## Patentanspruch

Verfahren zum kontinuierlichen Herstellen von Propylen-Ethylen-Polymerisaten vom Typ der sogenannten "Block-Copolymerisate" wobei man jeweils in Anwesenheit von Wasserstoff als Molekulargewichtsregler in einem bewegten Festbett aus kleinteiligem Polymerisat bei Abwesenheit eines flüssigen Reaktionsmediums aus der Gasphase heraus zunächst

(I) in einer ersten Polymerisationszone Propulen durch Zufuhr eines Ziegler-Natta-Katalysatorsystems aus

(1) einer Titan-III-Komponente,

(2) einer Dialkylaluminiumchlorid-Komponente sowie

(3) - gegebenenfalls - einer weiteren Katalysator-Komponente homopolymerisiert und dann

(II) in einer zweiten Polymerisationszone ein Gemisch aus Propylen und Ethylen durch Zufuhr des in der ersten Polymerisationszone erhaltenen Reaktionsguts - sowie gegebenenfalls zusätzlicher Katalysatorkomponente (1) und/oder (2) und/oder (3) - dem darin vorliegenden Propylen-Homopolymerisat hinzupolymerisiert,

mit der Maßgabe, daß das Atomverhältnis Titan aus der Titan-III-Komponente (1) : Aluminium aus der Dialkylaluminiumchlorid-Komponente (2) insgesamt im Bereich von 1 : 2 bis 1 : 15 liegt, dadurch gekennzeichnet, daß

(a) in der ersten Polymerisationszone bei einem Gesamtdruck von 25 bis 40 bar sowie einer Temperatur von 70 bis 100° C gearbeitet wird, mit der Maßgabe, daß das Verhältnis Propylen-Partialdruck : Wasserstoff-Partialdruck (P/H-I) 100 : 0,1 bis 100 : 15 beträgt,

(b) in der zweiten Polymerisationszone bei einem Gesamtdruck von 22 bis 34 bar sowie einer Temperatur von 63 bis 83° C gearbeitet wird, mit den Maßgaben, daß (i) das Verhältnis Propylen-Paritaldruck : Ethylen-Partialdruck 100 : 10 bis 100: 70 und (ii) das Verhältnis Propylen-Partialdruck : Wasserstoff-Partialdruck (P/H-II) 100 : 5 bis 100 : 50 beträgt,

(c) der Gesamtdruck in der ersten Polymerisationszone um wenigstens 5 bar höher gehalten wird als der Gesamtdruck in der zweiten Polymerisationszone,

(d) das Verhältnis Propylen-Partialdruck: Wasserstoff-Partialdruck in der ersten Polymerisationszone (P/H-I) zu dem Verhältnis Propylen-Partialdruck : Wasserstoff-Partialdruck in der zweiten Polymerisationszone (P/H-II) so eingestellt wird, daß die Relation P/H-I : P/H-II einen Wert von 0,6 bis 1400 hat, und

(e) das Verhältnis Gewicht des in der ersten Polymerisationszone in Polymerisat umgesetztes Propylen: Gewicht des in der zweiten Polymerisationszone in Polymerisat umgesetztes Gemisch aus Propylen und Ethylen einen Wert zwischen 100 : 40 bis 100 : 150 hat.

## Claim

A process for the continuous preparation of propylene/ethylene block copolymers, in which, in an agitated fixed bed comprising small polymer particles, in each case in the presence of hydrogen as a molecular weight regulator and in the absence of a liquid reaction medium, first

(I) propylene is homopolymerized, from the gas phase, in a first polymerization zone, by feeding in a Ziegler-Natta catalyst comprising

(1) a titanium (III) component and

(2) a dialkyl-aluminum chloride component, with or without

(3) a further catalyst component, and then

(II) the product obtained in the first polymerization zone is fed, with or without additional catalyst components (1) and/or (2) and/or (3), into a second polymerization zone, where a mixture of propylene and ethylene is polymerized with the propylene homopolymer present in the product from the first polymerization zone,

with the proviso that the overall atomic ratio of titaniumfrom the titanium (III) component (1) to aluminum from the dialkyl-aluminum chloride component (2) is from 1 : 2 to 1 : 15, wherein

a) in the first polymerization zone, the reaction is carried out under a total pressure of from 25 to 40 bar and at from 70 to 100°C, with the proviso that the ratio of the partial pressure of propylene to that of hydrogen (P/H-I) is from 100 : 0.1 to 100: 15,

b) in the second polymerization zone, the reaction is carried out under a total pressure from 22 to 34 bar and at from 63 to 83°C, with the provisos that (i) the ratio of the partial pressure of propylene to that of ethylene is from 100 : 10 to 100 : 70, and (ii) the ratio of the partial pressure of propylene to that of hydrogen (P/H-II) is from 100: 5 to 100 : 50,

c) the total pressure in the first polymerization zone is kept not less than 5 bar higher that that in the second polymerization zone,

d) the relationship between the ratio partial pressure of propylene partial pressure of hydrogen in the first polymerization zone (P/H-I) and the ratio partial pressure of propylene partial pressure of hydrogen in the second polymerization zone (P/H-II) is set so that the ratio P/H-I : P/H-II is from 0.6 to 1400, and

e) the weight ratio of propylene converted to polymer in the first polymerization zone to propylene/ethylene mixture converted to polymer in the second polymerization zone is from 100 : 40 to 100 : 15.

## Revendication

Procédé de préparation en continu de polymères propylène/éthylène du type des copolymères dits séquencés, dans lequel, à chaque fois en présence d'hydrogène en tant que régulateur de poids moléculaire, dans un lit de matières solides en mouvement fait de petites particules de polymère et en l'absence de milieu réactionnel fluide autre que la phase gazeuse,

(I) on effectue d'abord l'homopolymérisation de propylène, dans une première zone de polymérisation, par apport d'un système catalyseur Ziegler-Natta constitué de

(1) un composant du titane-III,

(2) un composant chlorure de dialkylaluminium ainsi que:

(3) - éventuellement - un autre composant de catalyseur, puis,

(II) dans une deuxième zone de polymérisation, on polymérise sur l'homopolymère de propylène déjà existant un mélange de propylène et d'éthylène par apport du produit de réaction obtenu dans la première zone de polymérisation, ainsi éventuellement que de composants de catalyseur (1) et/ou (2) et/ou (3) supplémentaires, avec la condition que le rapport atomique du titane du composant de titane-III (1) à l'aluminium du composant chlorure de dialkylaluminium (2) soit compris en général entre 1 : 2 et 1 : 15, caractérisé en ce que:

(a) dans la première zone de polymérisation, on travaille à une pression totale de 25 à 40 bars ainsi qu'à une température de 70 à 100°C, avec la condition que le rapport de la pression partielle de propylène à la pression partielle d'hydrogène (P/H-I) soit compris entre 100 : 0,1 et 100 : 15,

(b) dans la deuxième zone de polymérisation, on travaille à une pression totale de 22 à 34 bars ainsi qu'à une température de 63 à 83°C, avec la condition que (i) le rapport de la pression partielle de propylène à la pression partielle d'éthylène soit de 100 : 10 à 100 : 70 et (ii) que le rapport de la pression partielle de propylène à la pression partielle d'hydrogène (P/H-II) soit compris entre 100 : 5 et 100 : 50,

(c) la pression totale dans la première zone de polymérisation est supérieure d'au moins 5 bars à la pression totale dans la deuxième zone de polymérisation,

(d) le rapport de la pression partielle de propylène à la pression partielle d'hydrogène dans la première zone de polymérisation (P/H-I) est ajusté au rapport de la pression partielle de propylène à la pression partielle d'hydrogène dans la deuxième zone de polymérisation (P/H-II) de telle sorte que la relation P/H-I : P/H-II ait une valeur de 0,6 à 1400, et

(e) le rapport du poids de propylène transformé en polymère dans la première zone de polymèrisation au poids du mélange de propylène et d'éthylène transformé en polymère dans la deuxième zone de polymérisation à une valeur comprise entre 100 : 40 et 100 : 150.